# EUROPEAN PATENT APPLICATION

(11) **EP 2 028 866 A1**
(43) Date of publication of application: **25.02.2009**
(21) Application number: 07291025.0
(22) Date of filing: 20.08.2007
(51) Int. Cl.: H04N 7/68

(54) **A device and associated method for concealing errors in decoded media units**

(71) Applicant: Alcatel Lucent, 75008 Paris (FR)
(72) Inventor: van Caenegem, Tom, 9820 Schederode (BE); van Lancker, Wim, 9070 Heusden (BE); Lambert, Peter, 8700 Aarsele (BE); Van de Walle, Rik, 9880 Aalter (BE); Struyve, Kris, 8400 Oostende (BE)
(74) Representative: Plas, Axel Ivo Michel

(57) **Abstract**

The present invention relates to a device (101) for decoding a plurality of encoded media units in streamed media. The device (101) comprises decoder means (104) for decoding one or more of the encoded media units thereby generating one or more decoded media units and first concealment means (105) for concealing at least one error in a decoded media unit thereby generating a first concealed media unit. The device (101) further comprises second concealment means (106) for generating a second concealed media unit based on one or more first concealed media units and/or one or more previously generated second concealed media unit and means for selecting (110) the first concealed media unit or the second concealed media unit for presentation.

## Description

### Field of the Invention

The present invention generally relates to concealing errors in media streaming, for instance concealing errors in video or audio streaming. Streamed media are typically made up out of a number of encoded media units or frames that are decoded, for instance into images that can be displayed to a user or audio fragments that are listened to by a user. The present invention deals with errors in such media units or frames and conceals errors in the presented media.

### Background of the Invention

Data transmissions of any kind are typically subject to errors, for instance bad transmission medium conditions may influence data transmissions. Such bad conditions may corrupt the transported data, may turn data undeliverable or may affect the bit-rate of a medium. Crosstalk or impulse noise are often found to be the cause of errors during data transmission.

Various solutions exist to cope with such errors. Retransmission schemes such as used in the TCP protocol ensure that all data packets are delivered to their destination within a particular timeframe. If a data packet is not delivered within that timeframe, the transmitter automatically retransmits the data packet. Thus, if a data packet is undeliverable, the timeframe will expire and the data packet will be retransmitted. Other variants of retransmission are based on an explicit retransmission request, whereby a receiver tracks the received packets and is able to determine which packets are missing. The receiver can then request retransmission of any missing packet when the packet is needed for further processing or after a timer has expired. In general, a data communication system is able to deal with errors which make data undeliverable.

A different type of problem is corruption of transmitted or streamed data. Such data may have been delivered to the receiver in time but may be beyond repair. Using error correction techniques, the receiver may attempt to correct any errors in the received corrupted data. Such error correction techniques typically involve the addition of redundant bits to transmitted data which can be used to correct errors at the receiver side. However, such techniques are limited to a number of errors that can be corrected. Additional errors, above the number that can be corrected may be detectable but cannot be corrected. In such case, the receiver may be enabled to request a retransmission of the corrupted data packet in order to receive a correct copy which can be processed.

Both of the above described solutions are able to deal with undeliverable or corrupted data. However, not all types of data transmission can cope with missing packets or delays introduced by waiting for the correction or retransmission of corrupted data. One particular example is streaming audio or video information to a playback device. Streaming media such as audio or video is based on the transmission of parts of the media by a transmitter and receiving and playback of the received part by a receiver. For instance a media-on-demand server in an IP television (IPTV) network can be the transmitter and a set-top box can be the receiver which receives the media stream and delivers it to a television set for playback. If a part of the media stream is corrupted and additional processing or retransmission is required, the media contained therein may be available for playback only after the regular time of playback for that part has passed. For instance, if a part of a movie is corrupted and retransmission is needed, it may take some time before that part is available. Thus, the playback device has to conceal the missing part for the user.

A first way of concealing a missing or corrupted piece of a media stream is by holding the previous part until a new part or correct part is available. Consider a streaming video wherein the movie is made up out of a series of frames and where each frame constitutes a single picture. If the first, second and fourth frame are received correctly and the third one is missing, the playback device may display frame one, then frame two, then frame two again and then frame four. This hides the missing frame from the user as there is no gap such as a blank screen, in the movie.

A second way of concealing a missing or corrupted piece of a media stream is by calculating the missing part from one or more of the previous parts. Consider the same situation as above with three correct frames and one missing, the playback device could display the first frame, the second frame, a third frame calculated from the second, and then the fourth frame. This way, there is no blank in the movie and thus the error is concealed to the user.

As an example, streaming of Moving Picture Experts Group (MPEG) frames can be considered. The MPEG standard specification provides video compression for streaming and specification describes three types of frames: key frames (I-frames), forward prediction frames (P-frames) and bidirectional prediction frames (B-frames). A key frame contains the most information related to an image and does not rely on information of other frames. An MPEG decoder can decode an I-frame for display to a user without additional requirements. The P-frames are made up out of an incremental difference from the previous I-frame. An MPEG decoder needs information related to that I-frame and the P-frame to decode and display the image. At last, the B-frame is made up out of a difference from the preceding I-frame and the following P-frame. A B-frame can be decoded by an MPEG decoder with knowledge about the preceding I-frame or P-frame and is thus dependant on the presence of such frame before decoding. MPEG frames are generally stored in groups starting with an I-frame, followed by one or more B-frames and finally a P-frame. This means that each group can individually be decoded and presented as a number of subsequent images to a user. Such groups are called "Group of Pictures" (GOP).

It should be apparent to those skilled in the art that MPEG encoding adds a complexity to concealing errors. For instance, if an I-frame is missing or corrupted, several frames depending on that I-frame cannot be decoded or may be decoded incorrectly. Incorrect decoding may lead to visible distortions or artefacts in the images shown to the user. The above described concealment methods are also applicable to MPEG streams. For instance, if a frame is missing, it may be concealed by freezing or interpolation. However, depending on the type of frame that is missing or corrupted, a freeze may take too long and interpolation may not be possible or may require a lot of calculations. If an I-frame is missing, the decoder cannot decode the P and B frames in the same GOP as the I-frame. This may be overcome by freezing the image for the duration of the GOP which can be up to a second or more. Alternatively, if the I-frame is corrupted, it may be possible to decode the other frames in the GOP based on a corrected (interpolated) I-frame. However, this means that any subsequent frame which depends on the corrected I-frame may contain the same or more display errors or artefacts as the corrected I-frame.

The same applies to a lesser extent to P-frames and B-frames. A B-frame is typically only used for decoding a single image which means that freezing a single B-frame or interpolating a B-frame is less or not noticeable to the user. P-frames are typically used to decode a number frames depending thereon, but less frames than an entire GOP. As such, freezing during the duration of a P-frame and the B-frames depending thereon may be more visible than freezing for a B-frame but less than for an I-frame.

In general, a missing frame influences at least the decoding of that single frame and may affect the decoding of subsequent frames which depend on the missing frame. If a missing frame is concealed by freezing the image until a new image can be decoded, the length of the freeze depends on the type of frame that is missing and thus the annoyance for a user also depends thereon. If a corrupted frame is received, the decoding of that frame is affected and any corrections made to the frame may carry over to other frames depending on the corrupted frame. This may lead to more errors in subsequent images or noticeable artefacts on the images shown to the users.

It is an objective of the present invention to overcome the drawbacks of the above described prior art solutions for concealing errors based on freezing or interpolating. It is another objective of the present invention to provide an improved method for concealing errors in media decoding. It is yet another objective of the present invention to reduce the number of visible errors for the users in media streaming.

### Summary of the Invention

According to the present invention, the above objectives are realized by a device for decoding a plurality of encoded media units in streamed media, the device comprising decoder means for decoding one or more of said encoded media thereby generating one or more decoded media units, first concealment means for concealing at least one error in a decoded media unit, thereby generating a first concealed media unit, second concealment means for generating a second concealed media unit based on one or more previously generated first concealed media units and/or one or more previously generated second concealed media units and means for selecting the first concealed media unit or the second concealed media unit for presentation.

Indeed, by concealing errors in decoded media units and adding another step of error concealing, the media units presented to users can be improved in quality. The selector has the choice between two sources of media units for presentation whereas the prior art solutions only have one source of media units for presentation. The selector is provided with two different media units and can select the media unit of the highest quality for presentation. Both media units can be of different quality because different correction and concealment processes may be applied or one media unit can be an improved version of the other. A particular example of this is a scenario where freezes in the media stream are reduced in length. Such shorter freezes will appear as more fluently than a single media unit being presented for up to a second. A further advantage of the choice available to the selector is that errors corrected by interpolation which may persist through multiple media units may even grow can now be reduced. By adding a second step of concealing errors, such errors can be hidden from the users or be reduced in number.

In the light of the present invention, an encoded media unit is considered as a piece of information related to media stream which is encapsulated in a data unit which is delivered to the decoding device. For instance parts of a video stream delivered to a CPE, Set-Top Box (STB) or video playback device constitute encoded media units. A decoded media unit is the result of decoding an encoded media unit. Any deficiencies in the encoded media unit and/or the decoded media unit are concealed by first concealment means which deliver a first concealed media unit. This first concealed media unit is thus made up out of a decoded media unit wherein errors are corrected or concealed. Typically, a decoded media unit can be presented to a user whereas an encoded media unit is a compressed and/or encoded version thereof suited for transmission but not necessarily presentable. The first and second concealed media units can also be presented to a user and are generally not compressed and/or encoded. It is also possible that the encoded media unit contains the presented information of a media fragment and additional error correction related information.

Optionally in the device according to the present invention, the first concealment means and/or the second concealment means may comprise one or more of the following:
- means for freezing a media unit; and
- means for interpolating.

Freezing a media unit or holding the decoded media unit for a length of time is one possible way of concealing errors. Freezing consists of holding a previously decoded media unit for a length of time instead of decoding one or more subsequent encoded media units. The result of freezing is that an audio or video stream appears to pause for a period of time. The effect of freezing can be achieved by decoding the same encoded media fragment more than once or storing a decoded media fragment once it has been decoded and using it for presentation more than once. Interpolation is a more complex concealment method whereby a concealed media unit is generated based on one or more previously decoded media units or concealed media units. Interpolation can take into account changes in motion, colour, position, etc. of parts in the image or audio of the decoded media unit and use these to generate an image or audio sample which resembles the image or audio sample that would have been decoded next. Freezing can be noticeable to the user, especially if a decoded media unit or concealed media unit is held for a longer timeframe. Interpolation is assumed to be less noticeable, in particular in slowly moving media, because for instance the images of the video stream keep on moving in what appears to be a natural way.

Consider the following example, the first concealment is configured to freeze the previously decoded media unit if decoding of an encoded media unit is impossible or incorrect and the second concealment is configured for interpolating media units based on previously presented media units. The first concealment delivers a first concealed media unit to the selector which can be presented once. This first concealed media unit can then be used by the second concealment function to calculate the second concealed media unit, based on the previously presented media unit. This results in a media stream with shorter timeframes with a static media fragment than the case where only freezing by the first concealment is used.

Optionally, the means for electing according to the present invention may be adapted to select the first concealed media unit or the second concealed media unit based on a quality assessment.

Further optionally, the device for decoding a plurality of encoded media units in streamed media according to the present invention may be characterized in that the quality assessment is based on one or more of the following:
- type of the decoded encoded media unit;
- number of decoded encoded media units in the streamed media wherein at least one error is concealed; and
- number of artefacts in a decoded media unit.

The selector needs a criterion on which the decision is made to present the first concealed media unit or the second concealed media unit. As the objective is to improve the quality of the presented media stream, it can be advantageous to use a quality assessment for the selection. The quality assessment can be based on the quality of the presented media units, the quality of encoded media units, the quality of decoded media units or the quality of the first and/or second concealed media units. Additionally, the quality assessment may take into account several parameters simultaneously, for instance the number of corrupted encoded media units that are received together with the type of the corrupted encoded media units and the number of corrections made so far.

Another option of the device for decoding a plurality of encoded media units in streamed media according to the current invention is that the plurality of encoded media units may be inter-dependant media units.

Further optionally, the inter-dependant media units may be Media Pictures. Experts Group (MPEG) frames.

Generally, inter-dependant media units or media units that are related to each other are received in groups. It may be beneficial to consider the quality of each group based on the position of a particular media unit in that group rather than the quality of individual media units. For instance, if an encoded media unit is used as a basis for decoding several other encoded media units, the quality of all the media units in that group may be affected when errors are concealed. A specific example is MPEG, wherein the frames are interconnected by their dependencies. Therefore the quality assessment may be based on an entire Group of Pictures (GOP). Within a GOP, a missing B-frame can easily be overcome by freezing the previous frame for the duration of that missing B-frame, while the next frame can be decoded and used as normal. However a missing P-frame or I-frame influences the subsequent frames, which may not be easily overcome by freezing for a single frame.

If the media items do not belong together in groups, are less or independent within a group or when processing time should be reduced, it may be possible to use less complex quality assessments for the selection. For instance a simple counter which tracks the number of errors that have been corrected so far since the last change in selection may be used. This way, it may be possible to conceal errors with a series of short freezes, i.e. each media unit is held for one or two subsequent timeslots and then a new media is presented for a few timeslots. This way, a long freeze is cut up into small freezes which is less visible to the user and the selection is made based on the number of times a frozen media unit is used.

Of course, other quality assessments are also possible, for instance there may be a way of artefact detection in the presented media unit. In such case, there can be a threshold for artefacts and if such threshold is exceeded, a previous decoded media unit, a first or second concealed media unit may be used.

Optionally, the device for decoding a plurality of encoded media units according to the present invention may be characterized in that the means for selecting comprise an interface to receive signalling from the first concealment means.

The selector may be able to perform its own quality assessment to make a selection or be programmed in a particular way of selecting the media units for presentation.

However, because there is already a decoding step and a way of detecting and correcting or concealing errors (the first concealment), it can be beneficial to use the information from this concealment as input for the selector. This way, the selection can be based on information which is already available and thus requires less time and effort from the selector as basis of the selection of a media unit for presentation. The information may also be used in addition to other information from for instance the second concealment, the decoder itself or even external sources.

The present invention further relates to a method for decoding a plurality of encoded media units in streamed media, the method comprising the steps of decoding one or more of the encoded media units thereby generating one or more decoded media units and concealing at least one error in a decoded media unit thereby generating a first concealed media unit, generating a second concealed media unit based on one or more previously generated first concealed media units and/or one or more previously generated second concealed media units and selecting the first concealed media unit or the second concealed media unit for presentation.

### Brief Description of the Drawings

Fig. 1 illustrates a piece of customer premises equipment (CPE) according to an embodiment of the present invention; and
Fig. 2 illustrates a series of media units and corrected media units according to the present invention.

### Detailed Description of Embodiment(s)

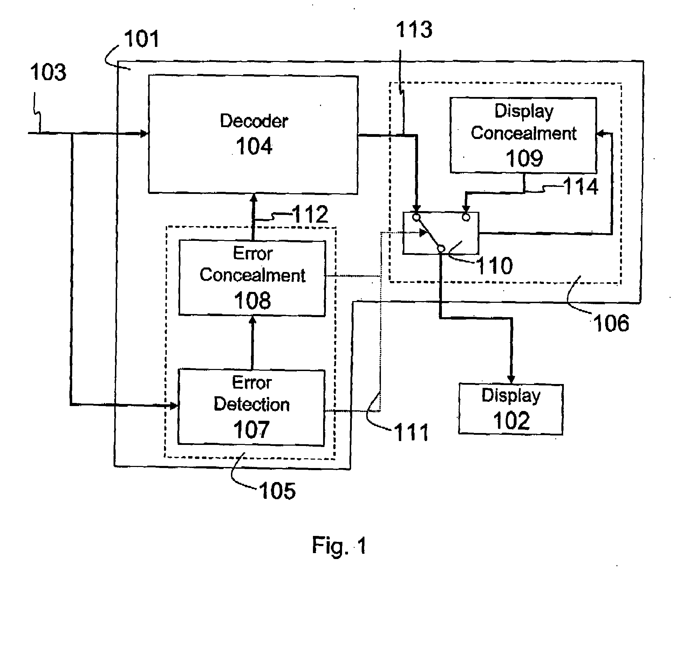

Fig. 1 illustrates a CPE 101 according to an embodiment of the present invention. The CPE 101 is a video enabled CPE such as a set-top box for digital television, a computer hardware module or a computer software application for digital television. The display 102 which is shown can be a physical display, for instance the television set whereto CPE 101 is connected, display hardware in a computer system or a display process running on a computer system. In general, display 102 is used to show decoded and possibly corrected frames to one or more users. The CPE 101 is further connected to a broadband access network through subscriber line 103. The subscriber line transports video information from a source such as a digital television service provider's video library to the CPE 101.

CPE 101 consists of a decoder 104, a first concealment or decoder coupled concealment module 105 and a second concealment or display coupled concealment module 106. The decoder 104 is used to decode frames received over subscriber line 103. In addition, the decoder 104 receives input 112 from the decoder coupled concealment module 105. The decoder coupled concealment module 105 contains an error detection function 107 which receives the same frames as decoder 104 from the subscriber line 103 and which detects errors in the received frames. Detected errors can then be corrected by the error concealment function 108 in the decoder coupled concealment means 105. In this particular example, the error concealment function 108 is configured to freeze the frame in order to correct any errors in the next frame. Decoder 104 receives the corrections from the decoder coupled concealment module 105 and takes the corrections into account. Then the decoder 104 delivers the decoded and corrected frames to the display coupled concealment module 106. This module 106 contains a display concealment function 109. Further, a selector 110 is shown in Fig. 1. The concealment function 109 is able to output images to selector 110 and receives input from selector 110. The input from selector 110 can for instance be the last image forwarded to the display 102. This way, the display concealment function 109 can keep track of previous images in order to conceal errors in the output to display 102. The selector 110, which in this particular embodiment is controlled by link 111 from the decoder coupled concealment module 105, selects which image is sent to the display 102. It can select the image 113 from decoder 104 which may or may not be corrected or it can select the image 114 from the display concealment function 109 which may be a previous displayed image or an image calculated based on or more of the previously displayed images.

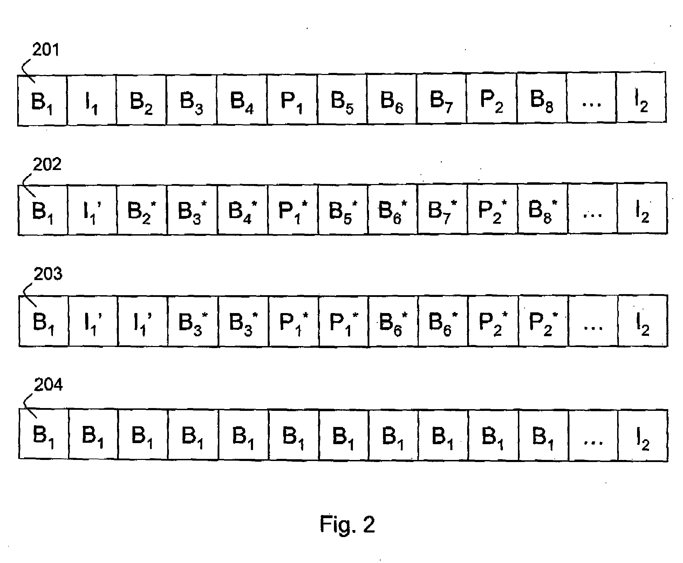

Fig. 2 illustrates a series of frames according to the present invention. This example uses MPEG frames to describe what the output to display 102 can be according to one particular embodiment. The I₁ frame is a reference frame for all the subsequent B en P frames until I2 and a P frame is a reference frame for all the subsequent B frames until the next P frame, thus P₁ is a reference for B₅ to B₇. Frames 201 illustrate a normal sequence of frames which can be decoded correctly and where no corrections or concealment is required. In frames 202, I₁' is a corrected version of the I₁ frame which is used as reference for all the subsequent frames. The frames denoted with a "*" are frames which are decoded based on a corrected frame such as I₁'. The frames 202 may contain artefacts which can grow before I₂ is received and decoded. However, frames 203 illustrates the effect of the device of the present invention, whereby the display coupled concealment uses the previously displayed picture to conceal errors. Thus, the decoder decodes and corrects the received frames as normal as shown in 202 and then the display coupled concealment replaces a picture with the previous picture at regular intervals. The effect of this is illustrated in 203, where B₁ is a correctly decoded frame belonging to the previous group of pictures and I₁' is a first corrected frame. Instead of using a corrected version of B₂ based on I₁', the display coupled concealment uses I₁' a second time for display, then B₃* is used twice and so on. This shows that less different corrected frames are shown to the users. As such, less artefacts are visible which improves the quality of the video stream. For reference, a normal frozen video stream is shown in 204, wherein all the frames with errors or reconstructed frames are replaced with the last correct frame, in this case B₁. It is dear that the error concealment according to the present invention reduces the length of a freeze from an entire GOP as shown in 204 to the length of a few frames as shown in 203. As such, the still image during the video is significantly reduced in length of time.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", and the like, when used in the description or in the claims are introduced to distinguish between similar elements or steps and are not necessarily describing a sequential or chronological order.

## Claims

1. A device (101) for decoding a plurality of encoded media units in streamed media, said device comprising:
- decoder means (104) for decoding one or more of said encoded media units, thereby generating one or more decoded media units; and
- first concealment means (105) for concealing at least one error in a decoded media unit, thereby generating a first concealed media unit;
**characterized in that** said device further comprises
- second concealment means (106) for generating a second concealed media unit based on one or more previously generated first concealed media units and/or one or more previously generated second concealed media units; and
- means for selecting (110) said first concealed media unit or said second concealed media unit for presentation.

2. The device (101) for decoding a plurality of encoded media units in streamed media according to claim 1, **characterized in that** said first concealment means (105) and/or said second concealment means (106) comprise one or more of the following:
- means for freezing a media unit; and
- means for interpolating.

3. The device (101) for decoding a plurality of encoded media units in streamed media according to claim 1, **characterized in that** said means for selecting (110) are adapted to select said first concealed media unit or said second concealed media unit based on a quality assessment.

4. The device (101) for decoding a plurality of encoded media units in streamed media according to claim 3, **characterized in that** said quality assessment is based on one or more of the following:
- type of the decoded encoded media unit; and
- number of decoded encoded media units in said streamed media wherein at least one error is concealed.
- number of artefacts in a decoded media unit.

5. The device (101) for decoding a plurality of encoded media units in streamed media according to claim 1, **characterized in that** said means for selecting (110) comprise an interface (111) to receive signalling from said first concealment means (105).

6. The device (101) for decoding a plurality of encoded media units in streamed media according to claim 1, **characterized in that** said plurality of encoded media units are inter-dependant media units.

7. The device (101) for decoding a plurality of encoded media units in streamed media according to claim 6, **characterized in that** said inter-dependant media units are Media Pictures Experts Group (MPEG) frames.

8. A method for decoding a plurality of encoded media units in streamed media, said method comprises the steps of:
- decoding one or more of said encoded media units thereby generating one or more decoded media units; and
- concealing at least one error in a decoded media unit thereby generating a first concealed media unit;
**characterized in that** said method further comprises the steps of:
- generating a second concealed media unit based on one or more previously generated first concealed media units and/or one or more previously generated second concealed media units; and
- selecting said first concealed media unit or said second concealed media unit for presentation.
